# EUROPEAN PATENT APPLICATION

(11) **EP 0 891 790 A2**
(43) Date of publication of application: **20.01.1999**
(21) Application number: 98305671.4
(22) Date of filing: 16.07.1998
(51) Int. Cl.: A63B 53/04, B29C 45/14, B29C 70/68

(54) **Multiple density golf club head and method of manufacturing**

(30) Priority: 18.07.1997 US 897076; 22.06.1998 US 102725
(71) Applicant: Never Compromise, Inc., Vista, California 92083 (US)
(72) Inventor: McGeeney, James P., Poway, California 92064 (US); Morris, Thomas C., Carlsbad, California 92009 (US); Pond, Brian, San Marcos, California 92069 (US); Sanyal, Vikash, Escondido, California 92026 (US); Schmoldas, Andre, Solana Beach, California 92075 (US)
(74) Representative: Dean, John Paul

(57) **Abstract**

A multiple density golf club head including discreet heel and toe sections and a center section, the center section being formed of a material that is relatively less dense than that of the heel and toe sections. The materials in the heel, toe and center segment extend for the entire depth of the club head. The positioning of the higher density regions at the heel and toe of the golf club provides for desirable heel-toe weighting characteristics. Also disclosed is a method for manufacturing a golf club head in accordance with the present invention. The method incorporates various manufacturing techniques into a process for manufacturing the club head of the present invention.

## Description

This application is a continuation-in-part of U.S. patent application Serial No. 08/897,076, which was filed July 18, 1997.

### Background of the Invention

### Field Of The Invention

The present invention relates to golf club heads, and more particularly, to a golf club head which includes sections having different densities and materials.

### Description of the Related Art

Presently, golf clubs can be classified into three groups: woods, irons, and putters.

Generally, woods are used by golfers at the tee area to drive the golf ball over long distances. Woods were originally constructed of wood materials, such as persimmon. While woods constructed from wood materials are still prized by many golfers, their performance may be less than optimum because of the low density of the wood material used. Therefore, the "metal wood" club was created to enhance the performance of wood-type clubs. A metal wood reproduces the shape of a traditional wood but has a head made entirely of steel or other metallic material.

Irons are generally used for intermediate strokes usually between the teeing ground and the green where the hole is located. Typically, an iron has a club head which is manufactured from some form of metal, such as steel, which forms the entire head of the club.

The third type of golf club, the putter, is used on or around the green area for sinking the golf ball into the golf hole. The club head of the putter is generally constructed of a metallic material, as in the irons.

Woods, irons, and putters all have a strike face which contacts the golf ball when the ball is struck by the golf club head. Putters and irons typically have a strike face with a planar or flat surface. A wood-type club is conventionally provided with a strike face that has bulge and roll curvatures and is not flat or planar.

Various strategies have been used to improve the hitting characteristics of golf club heads. One of the strategies has been to add inserts to the face of the golf club head. In designing a golf club with face inserts, the material of the insert is selected to provide the desired hitting characteristics in the golf club. The properties of the insert material, such as the weight, friction, flexural modulus, and hardness, can greatly influence the hitting characteristics of the golf club. For example, insert materials having a high coefficient of friction tend to produce a golf club that generates higher levels of spin on the golf ball, which allows the better golfer to control and manipulate the golf shot. However, the novice player may not prefer a golf club that produces high levels of spin on the golf ball as it may decrease the distance of the golf shot and may increase the tendency of the golf ball to hook or slice.

Many variations of club heads having such face inserts have been proposed. Generally speaking, the insert covers only a portion of the face of the golf club head and extends into the club only for a portion of the depth of the club head. Often, the club head has a backing material into which the insert is placed. Examples of golf club heads having inserts can be found in U.S. Patent Nos. 4,883,275, 5,358,249, 5,405,136, 5,423,535, 5,489,094 and 5,575,472.

Another strategy for improving the hitting characteristics of golf club heads is to adjust the weight distribution within the club head. It is well known that the weight distribution in the head affects the tendency of the club head to rotate about the golf club shaft during ball/club impact, especially when the ball/club impact occurs in a position on the club face other than the center of gravity. Various weighting techniques have been attempted to reduce this rotational tendency by changing the weight distribution in the club head. Such techniques often involve either perimeter weighting in which the weight is distributed to the perimeter areas of the club away from the center of the club head, or heel-toe weighting in which materials having different densities are used in the heel, toe and center portions of the club head in order to distribute more weight in the heel and toe of the golf club.

One form of perimeter weighting uses perimeter weight inserts. The use of lower density face inserts also may serve to distribute weight to the perimeter of the club head. Perimeter weighting characteristics can also be achieved by shaping a club head to produce a cavity in the back of the club thereby producing a complex shape wherein the weight of the club is greater along the perimeter of the club head. One version of the heel-toe weighting involves fabricating a club head wherein high density alloys are used in the heel and toe portions of the club head and a low density alloy is used in the center portion of the club head. Examples of perimeter weighting and heel-toe weighting techniques can be found in U.S. Patent No. 4,992,236.

While the use of perimeter weighting, heel-toe weighting and face inserts in the design of golf club heads has improved the performance of golf clubs, these techniques have also raised the price of these specially designed golf clubs as the manufacturing and assembly operations used in producing these types of club modifications are relatively complex.

Therefore, there is a continuing need in the art for a golf club head that combines the performance characteristics of golf club heads having perimeter weighting and heel-toe weighting and the performance characteristics of golf club heads using face inserts, and can provide a better feel and a head structure which limits the adverse effects of an off center ball/club impact while achieving manufacturing cost efficiencies not possible with the complex manufacturing operations used in present golf club designs.

### Summary of the Invention

The present invention alleviates to a great extent the disadvantages of golf club heads having perimeter weighting and face inserts by providing a golf club head with a uniform depthwise construction, a relatively dense section at the heel and toe of the club head, and a relatively less dense section in the center of the club head. The relatively dense materials in the heel and toe regions of the club head extend the entire depth of the club head, respectively at the heel and toe regions. Likewise, the lower density material in the central region of the club head extends for the entire depth of the club head in the central region. The positioning of the higher density regions at the heel and toe of the golf club provides for desirable heel-toe weighting characteristics. Specifically, a high inertia design is achieved by placing high-density metals in the toe and heel as far from the center segment of the golf club as is possible. The center segment of the club is made with lower density materials. A high inertia design is desired to prevent the golf club from twisting when striking a golf ball on other than the "sweet spot" or center of gravity of the club. It is preferred that the center segment of the golf club head be made of a fiber reinforced composite, although any suitable material may also be used preferably having a density that is less than that of the heel and/or toe regions of the club head.

An exemplary golf club head having features of the present invention comprises three discrete segments: a heel formed of a dense metallic material; a toe formed of a dense metallic material; and a center segment formed of a non-metallic material. The non-metallic material of the center segment has a density substantially less than the metallic materials comprising the heel or the toe. The heel, toe and center segment are joined together to form a strike face which is used to contact the golf ball when the golf club is swung. The non-metallic material used in the center segment is homogenous substantially entirely along at least one plane perpendicular to the strike face of the golf club head. In other words, at least one depthwise traverse in the center segment from the front surface to the back surface of the club head would consist entirely of the non-metallic material.

The present invention also provides a method for manufacturing a golf club head in accordance with the present invention. The method of the invention includes the steps of forming the toe of the golf club head in a first forming operation and forming the heel of the golf club head in a second forming operation. The heel and the toe are then placed in a molding die on opposite sides of a die chamber which is shaped to form a center segment of the club head. The center segment of the club head is then formed by a plastic molding operation which introduces polymeric material into the die chamber. The resulting club head includes a center segment connecting the heel and the toe in a unitary club head structure. In an alternative method of the invention, the heel, toe and center segment are formed in separate operations and the three parts are assembled together into a club head using threaded fasteners and an adhesive which is placed between each of the parts. Various manufacturing processes are suitable for forming the heel and toe of the club head such as: powder metallurgy, which includes a hot or room temperature compaction operation with a high temperature sintering procedure and is optionally followed by a forging or metal infiltration cycle, injection molding, investment casting, and machining. Plastic molding operations suitable for forming the center segment and connecting the heel and toe include resin transfer molding, injection molding, reaction injection molding, and compression molding.

It is therefore an object of the present invention to provide a golf club head that combines a better feel and a head structure which limits the adverse effects of an off center ball/club impact while achieving manufacturing cost efficiencies not possible with other golf club head designs.

It still another object of the present invention to provide a method of manufacturing a golf club head having a heel formed of a dense metallic material, a toe formed of a dense metallic material, and a center segment formed of a non-metallic material.

### Brief Description of the Drawings

These and other features, aspects, objects, and advantages of the present invention will become better understood upon consideration of the following detailed description, appended claims and accompanying drawings where:
Figure 1 is a front perspective view of a putter-type golf club head made in accordance with the present invention;
Figure 2 is a rear perspective view of a putter-type golf club head made in accordance with the present invention;
Figure 3A is an exploded view of the components of a putter-type golf club made in accordance with the present invention;
Figure 3B is a sectional view taken along line 3B-3B of Figure 3A showing a cross-section of the center segment of a putter-type golf club made in accordance with the present invention;
Figure 4 is a front view of an iron-type golf club head made in accordance with the present invention;
Figure 5 is a front view of a wood-type golf club head made in accordance with the present invention;
Figure 6 is an exploded view of a putter-type golf club head made in accordance with the present invention wherein the center segment is not shown, the view showing recessed areas on the inner surface of the components;
Figure 7A is an exploded view of the heel and toe components of a putter-type golf club head made in accordance with the present invention wherein the center segment is not shown, the view showing projections on the inner surface of the components;
Figure 7B is an end view of a heel component of a putter-type golf club head made in accordance with the present invention, the view showing a projection on the inner surface of the heel;
Figure 7C is a front view of the heel component shown in Figure 7B, the view showing the projection on the inner surface of the heel;
Figure 8 is a perspective view of the bottom half of a molding die used in a first method of the present invention;
Figure 9A is a perspective view showing a second method for producing a golf club head in accordance with the present invention; and
Figure 9B is a sectional view taken along line 9B-9B in Figure 9A showing a step in the second method of the present invention.

It should be understood that the drawings are not necessarily to scale and that the embodiments are sometimes illustrated by graphic symbols, phantom lines, diagrammatic representations and fragmentary views. In certain instances, details which are not necessary for an understanding of the present invention or which render other details difficult to perceive may have been omitted. It should be understood, of course, that the invention is not necessarily limited to the particular embodiments illustrated herein.

Like reference numerals will be used to refer to like or similar parts from Figure to Figure in the following description of the drawings.

### Description of the Preferred Embodiments

The several embodiments of golf club heads described below have certain features in common, and the following description and claims employ common directional words relating to those features. The ball striking surface or "strike face" of the club head, which is intended to hit the golf ball, is located on the "front" of the club head. The terms "top" and "bottom" assume that the club head is oriented as it would be if the golf club were held by a golfer in an at rest position, i.e., the bottom of the club head would contact the ground when at rest. Those skilled in the art may also refer to the bottom of the club head as the "sole". The heel of the club head is located laterally opposite the toe of the club head. The heel portion of the club head would be nearest the golfer when the golfer holds the club in an at rest position. The term "depth" refers to a dimension extending from the front to the back of the golf club.

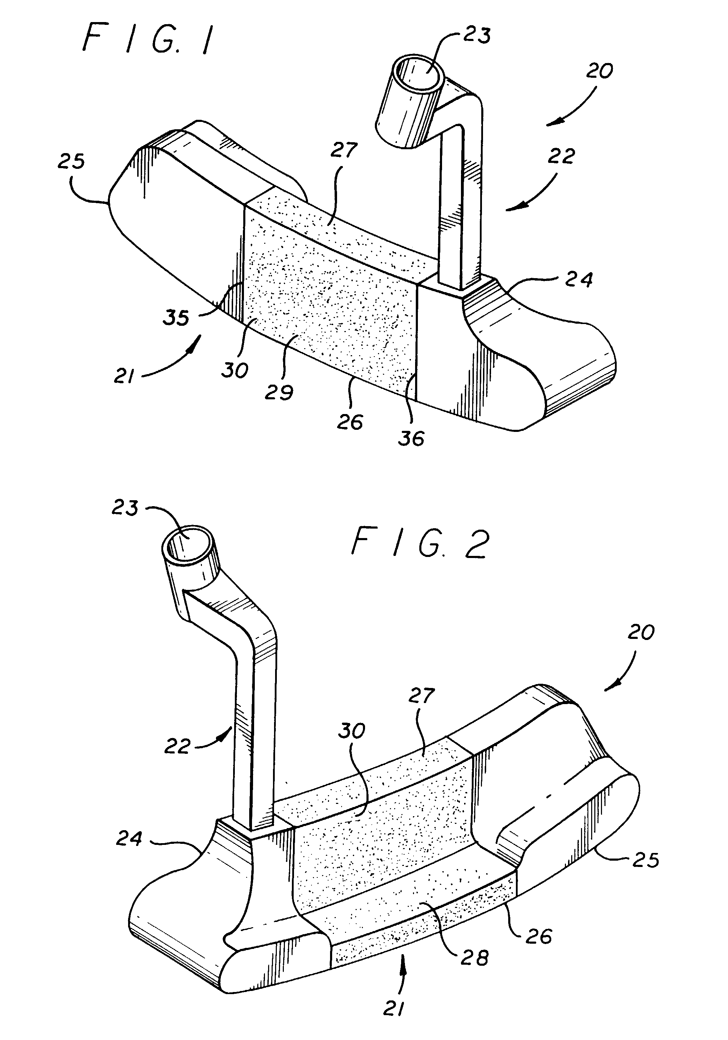

Referring now to Figures 1, 2, 3A and 3B, the numeral 20 designates generally a putter-type club head which includes a body 21 and a hosel 22. The hosel is provided with a bore 23 for attaching the club head 20 to a conventional shaft. The body includes a heel 24 which joins with the hosel 22, a toe 25, a bottom surface 26, a top surface 27, a back surface 28, a generally planar strike face 29, and a center segment 30. One skilled in the art would realize that the putter 20 depicted in the Figures is a "blade" type putter. However, the present invention also applies to the commonly sold "mallet" type putters and to less conventional putter designs.

The material of the central segment 30 is different than the material of the heel 24 and toe 25. Specifically, the center segment 30 preferably comprises a non-metallic material and the heel 24 and toe 25 each preferably comprise a metallic material. In the Figures, cross hatching is used to depict the metallic materials and dashed lines are used to depict the non-metallic materials. The metallic material used in the heel and toe may be the same or different depending on the hitting characteristics desired. As used throughout the specification and claims, the term "metallic material" refers to an engineering material that includes at least one metal. Therefore, an organic material having metal would be considered a metallic material. In most cases, the non-metallic material of the center segment 30 will be softer than the metallic material of the heel 24 and toe 25. The center segment 30 will thereby cushion and absorb the impact with the ball.

In one embodiment of the invention, the center segment 30 comprises an elastomer. Preferably, the elastomer is a thermoplastic elastomer selected from the group consisting of styrene co-polymers, co-polyesters, polyurethanes, polyamides, olefins and vulcanates. Inorganic fillers may also be added to the elastomer to achieve any combination of properties desired in the center segment 30. For example, the fillers may reinforce the elastomer. Suitable inorganic fillers include: glass, graphite or aramid fibers; silicates; calcium carbonate; silica; metal oxides such as aluminum oxide, titanium dioxide, and zinc oxide; carbon black; and metal powders. It is preferred that a fiber reinforced composite be used to form the center section 30, such as a fiber reinforced thermoplastic polyamide or a fiber reinforced thermoset polymer, as described in more detail below.

In another embodiment of the invention, the center segment 30 comprises a thermoset polymer. Thermosetting resins suitable for forming the center segment 30 include epoxides, polyimides and polyester resins. The preferred thermoset is an epoxy resin. Preferably, the thermoset is reinforced with fiber. Suitable fibers include glass, graphite and aramid fibers. The fibers may be oriented in the center segment 30 in any fashion, such as randomly, or a single direction or in multiple orientations (e.g. 0, 45 or 90 degrees). Preferably, the fibers used to reinforce the thermoset are continuous; however, matte, randomly oriented discontinuous fibers, or woven fibers also may be used. For example, the center segment 30 comprises a continuous fiber reinforced epoxy resin. Although the center segment 30 is constructed of non-metallic materials in the preferred embodiments, it should be understood that in alternative embodiments of the present invention, the center segment 30 may be constructed of other suitable materials having a lower density than the heel or toe materials, such as for example, a metallic material, a metal-containing composite, or a fiber reinforced low density metal matrix composite (by way of example, a boron fiber reinforced aluminum).

The specific material selected for the center segment preferably has a minimum durometer hardness of Shore D 50 as it is understood that the United States Golf Association requires this minimum hardness in the strike face of a golf club head. The heel 24 and toe 25 each preferably comprise a metallic material including at least one metal, and preferably each comprise a metallic material including at least two metals. The metallic materials preferably should have a final alloy density of at least 7 grams per cubic centimeter, although it should be understood that any density may be selected which is greater than that of the center section. In a more preferred version of the invention, the metallic materials each have a final alloy density of 7 to 13 grams per cubic centimeter. In a still more preferred version of the invention, the metallic materials each have a final alloy density of 9 to 11 grams per cubic centimeter. In a most preferred version of the invention, the metallic materials each have a final alloy density of approximately 10 grams per cubic centimeter.

The heel 24 and toe 25 may also each comprise a metallic material wherein a first metal is dispersed in a second metal or in a non-metallic matrix material. The dispersion of the first metal in the second metal is advantageously achieved by powder metallurgy techniques wherein a powder of the first metal is blended with a powder of a second metal and the resulting powder metal blend is compacted and sintered at temperatures below the melting point of both metals. The first metal should have a higher density than the second metal. The addition of a high density first metal to a lower density second metal allows the final alloy density of the metallic material of the heel 24 and the toe 25 to be increased in precision increments. In specific embodiments of the invention, the first metal has a density of at least 10 grams per cubic centimeter, and the second metal is selected from the group consisting of iron based alloys, nickel based alloys, and copper based alloys. Specific examples of a suitable first metal include tungsten, tantalum, niobium, and molybdenum. In one embodiment of the invention, the metallic material has a final alloy density of at least 10 grams per cubic centimeter and the metallic material has a final alloy density at least 8 times greater than the density of the non-metallic material. Although the heel and toe are constructed of metallic materials in the preferred embodiments, it should be understood that in alternative embodiments the heel and/or toe may be constructed of non-metallic materials that are relatively dense in comparison with the center section material.

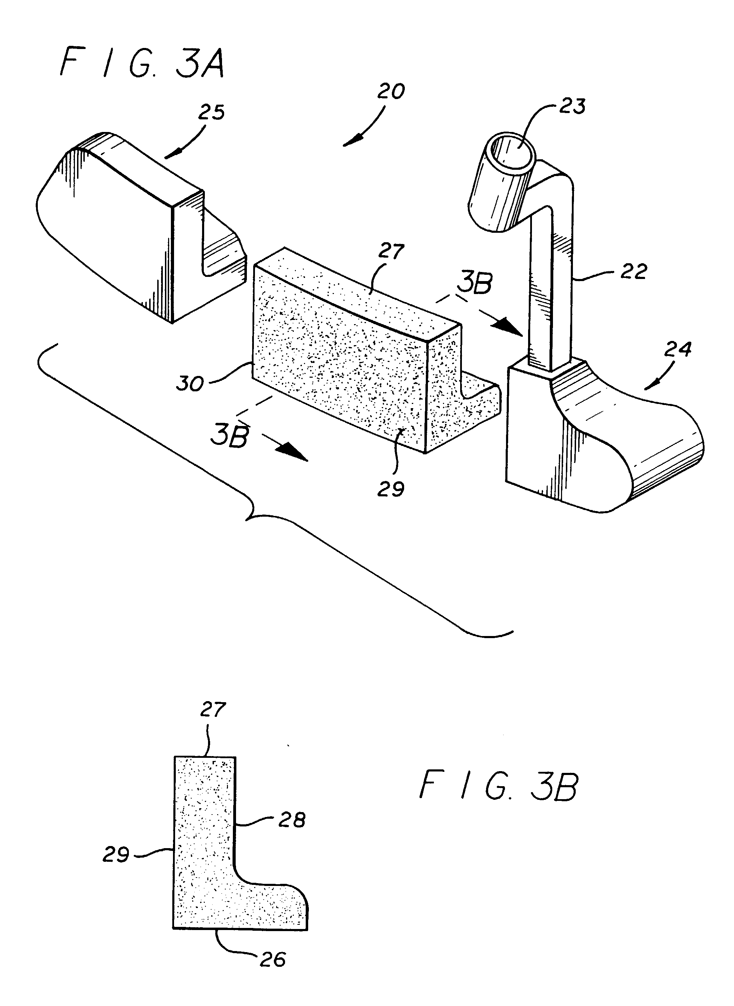

The materials used in forming the center segment 30 produce a final product wherein the material has a substantially homogeneous composition. In addition, the non-metallic material comprising the center segment 30 of the club head in the preferred embodiment is homogenous substantially entirely along at least one plane perpendicular to the strike face 29 as shown in Figure 3B.

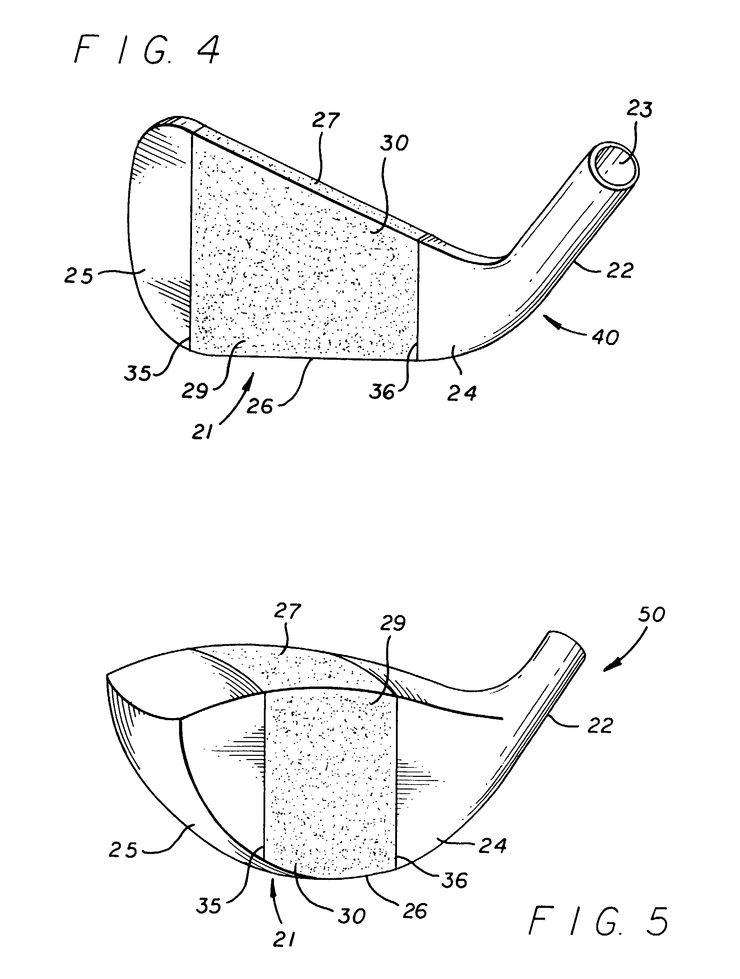

Figure 4 illustrates an iron-type club head 40 which is made in accordance with the invention. As can be seen from Figure 4, the iron-type club head 40 has identical features as the putter-type golf club head 20, namely relatively dense heel and toe, combined with a less dense center section, so reference can be to the description of the putter-type golf club head above. Similarly, Figure 5 illustrates a wood-type club head 50 which is made in accordance with the invention and has identical features as the putter-type golf club 20. Therefore, reference can be made to the above description of the putter-type golf club head 20 for a description of the features of the wood-type golf club head 50.

A golf club head according to the present invention can be made in accordance with any suitable method that results in a club head having sufficient structural integrity, although the methods set forth in this description are preferred.

In a preferred embodiment, the heel and toe of the club head are prepared by any suitable technique, such as by a powder metallurgy technique. For example, a first mold is prepared which has the shape of the toe 25 of the golf club head and a second mold is prepared having the shape of the heel 24 of the golf club head. These molds may be prepared using techniques and materials known to those skilled in the powder metallurgy art. After the molds have been prepared, each mold is filled with a powdered metallic material. Preferably, the same powdered metallic material is used in the first mold and the second mold. However, different powdered metallic materials could be used in the first mold and second mold.

After the powdered metallic materials have been placed in the first and second mold, the powdered metallic materials may be processed into the heel and toe portion of the golf club head by various powder metallurgy techniques. Specifically, more complex heel and toe designs can be most efficiently produced using cold isostatic pressing and pressureless sintering, whereas less complex heel and toe designs are best produced using hot die compaction, which is also referred to as hot pressing or pressure sintering. A combination of cold die compaction and pressureless sintering may also be used to produce the heel and toe.

In the powder metallurgy process which employs cold isostatic pressing and pressureless sintering to form the heel and toe, the first and second molds which contain the powdered metallic material are compressed at a pressure sufficient to form a green compact of the metallic material in the mold. Typically, pressure is applied equally to the powder from all sides. Preferably, the isostatic pressing takes place at ambient temperatures and the molds are made of elastomeric materials. After the pressing step, the green compact is removed from the mold and the part may be trimmed if necessary to achieve the desired shape. Preferably, minimal finishing of the green compact is necessary. After the green compact has been suitably trimmed, if necessary, it is then heated at an elevated temperature to achieve densification of the metallic materials in the green compact through a sintering process. The particular temperature utilized in this step of the process will vary depending on the metallic materials used in the mold. The powdered metal heel and toe sections of the golf club head of the present invention are best produced by solid state sintering. This process requires that the green compacts be held at a very high temperature just below the melting point of the metallic materials. The sintering step of the process is generally performed without the introduction of pressure into the heating chamber.

In the method of the present invention which employs isostatic pressing and pressureless sintering to form the heel and toe, the second mold having the shape of the heel is formed so that a bore is developed in the green compact of the heel after compressing. A third mold having the shape of a hosel of the golf club head is then prepared and filled with a third powdered metallic material. The powdered metallic material in the third mold is then compressed at a pressure sufficient to form a green compact of the powdered metallic material. The green compact is then removed from the third mold. An end of the green compact having the shape of the hosel is then inserted into the bore of the green compact formed in the shape of the heel of the club head. The heel and hosel compacts fit together snugly so that the alignment of the heel and hosel may be maintained during subsequent processing. The combined heel and hosel compacts are then be heated at an elevated temperature to form a sintered heel that includes an integral hosel. The third powdered metallic material used in this version of the method of the invention may be identical to or different from the first and second powdered metallic materials.

In the powder metallurgy process employing cold die compaction and pressureless sintering to form the heel and toe, the powdered metallic materials in the first and second molds are compressed at a pressure sufficient to form a green compact of the metallic material in the mold. Generally, pressing takes place at ambient temperatures. After the pressing step, the green compact is removed from the mold and is then heated at an elevated temperature to achieve densification of the metallic materials in the green compact through a sintering process. The sintering step of the process is generally performed without the introduction of pressure into the heating chamber. Room temperature die compaction and pressureless sintering are usually performed when the metal powders are more easily compacted.

In the powder metallurgy process employing hot die compaction to form the heel and toe, the first and second molds which contain the powdered metallic materials are placed in a furnace and pressure and temperature are simultaneously applied to the metallic materials to achieve densification of the metallic materials in the mold. The particular temperature and pressure used in the hot die compaction step of the process varies depending on the metallic materials used in the mold. The hot pressing is typically conducted at approximately half the absolute melting temperature of the powder metallic material, which is usually a lower temperature than is used in the pressureless sintering process.

After the sintered heel and the sintered toe of the golf club heads are produced in either the pressureless sintering or hot pressing process, they are allowed to cool and then are removed from the heating chamber. Preferably, the sintering process produces a near net shape heel and toe portion of the club head.

The heel 24 and toe 25 can also be formed by other suitable forming processes that achieve a heel 24 and toe 25 construction having sufficient structural integrity for use in the golf club of the present invention. In one such alternative embodiment, the heel 24 and toe 25 are formed using an investment casting process. In this process, wax patterns of the heel and toe are made in an injection mold, and then the patterns are affixed to a central member to create a "tree". The "tree" is coated, or invested, in a ceramic slurry and allowed to dry. The wax is removed from the "tree" by heating in an autoclave under the influence of heat and pressure, and the remaining ceramic "shell" is fired at high temperature to impart strength. Molten metal is poured into the ceramic mold and allowed to solidify to produce a heel or toe. High density commercially available alloys are suitable for melting and pouring into the investment casting molds. Preferably, a high density ferrous alloy having a density between 7 and 8 g/cm³ is used in the investment casting process. The liquid metal used in the investment casting process may also be produced by melting a metallic bar which has been formed by powder metallurgy techniques. In this version of the investment casting process, powder metallurgy techniques can be used to produce a metallic bar having a density higher than commercially available alloys. Accordingly, when the liquid metal produced by melting the metallic bar solidifies in the mold, it will produce parts having a higher final density than parts produced from commercially available alloys.

The heel 24 and toe 25 of the club head 20, 40 or 50 alternatively are formed using machining techniques wherein the heel 24 and/or the toe 25 is machined from a solid piece of a material such as metallic material or a metal alloy.

In another alternative method, the heel and toe of the club head may be formed using injection molding wherein a fluid mixture including a polymeric material, a fiber material, and a metallic material is injected into a first die chamber of an appropriate shape. The first and second die chambers are then cooled to solidify component formed.

The center segment 30 of the club head 20, 40 or 50 is also formed by various processes producing a center segment 30 having suitable ball striking characteristics. In one such process the center segment 30 is formed and connects the heel 24 and the toe 25 together in a unitary club head structure in a single operation. Alternatively, the center segment 30 is formed in a separate step before a joining step attaching the heel 24 and toe 25 to the center segment 30.

In the single operation embodiment (i.e. a die chamber embodiment), the center section 30 can be is fabricated by a molding process or any other process producing a suitably performing structure. In one example of the molding technique, the center section 30 is formed in a mold by placing a preformed heel 24 and a preformed toe 25 at opposite sides of a die chamber and molding the center section 30 between them. In this way, the golf club head 20, 40 or 50 is formed and the heel 24, toe 25 and center sections 30 are bound together.

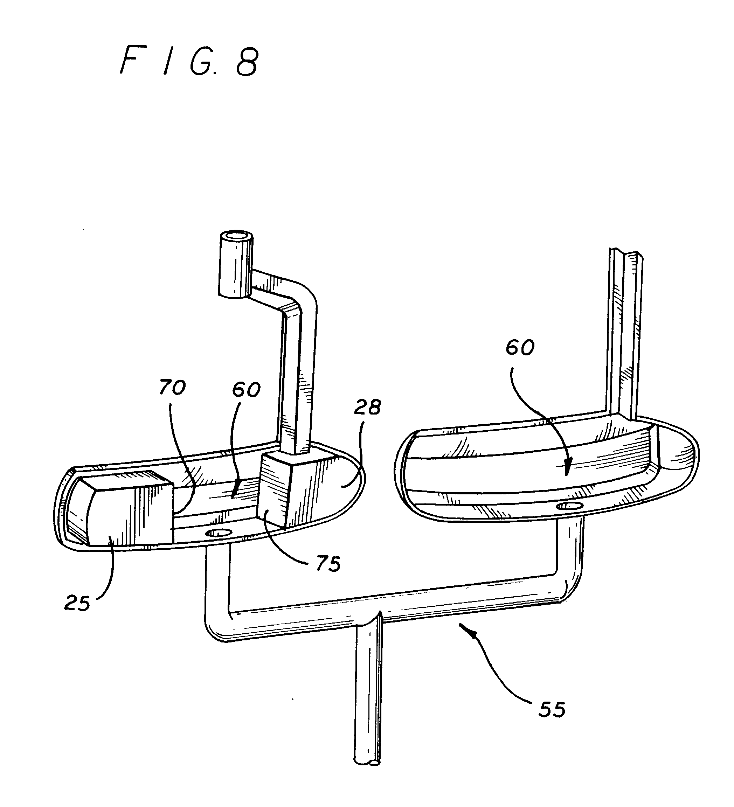

In the die chamber embodiment, the preformed heel 24 and toe 25 are placed in a molding die 55 on opposite sides of a die chamber 60 as shown in Figure 8. The die chamber 60 in the molding die 55 is shaped in the form of the center segment 30 of the golf club head 20 of the present invention. The molding die 55 is shown in Figure 8 with the toe and heel installed in the die chamber 60 on the left portion of the molding die 55. The right portion of the molding die 55 in Figure 8 shows the die chamber 60 without the toe and heel installed in the die. It can be seen that the molding die 55 holds the heel and the toe in facing relationship on opposite sides of the die chamber 60.

Various plastic molding operations for introducing polymeric material into the die chamber and forming the center segment of the club head can be used in the method of the present invention. Four types of plastic molding operations are particularly advantageous when employed in the method of the present invention.

First, resin transfer molding, wherein a polymeric material is injected into a closed mold at low pressure, would be suitable for forming the center segment of the club head. The low pressures used in resin transfer molding permit the use of molds that can contribute to a cost effective process. Resin transfer molding would be an excellent process choice for low to moderate production runs and is suitable for forming the center segment from a thermoplastic or thermosetting polymeric material, with or without a reinforcing fiber preform.

Second, injection molding, the most widely used plastic molding operation, would be beneficial in the method of the present invention. Injection molding techniques have now evolved to the point where extremely complex shapes can be molded in cost effective operations.

Third, reaction injection molding, wherein two or more liquid materials are mixed under high pressure and the resulting mixture is then injected into a mold at lower pressures where the material reaction is completed, would be suitable in the method of the present invention.

Fourth, compression molding, wherein a polymeric material is placed in a heated mold, the mold is closed, and compression pressure and heat are applied to the mold to shape a product, would be beneficial in the method of the present invention.

After the polymeric material has been introduced into the die chamber 60, the center segment 30 of the golf club head 20 of the present invention is formed. Because the heel and the toe are arranged in facing relationship on opposite sides of the die chamber 60 as shown in Figure 8, the polymeric material bonds to an inner surface 75 of the heel and an inner surface 70 of the toe when the polymeric material is introduced into the die chamber 60. After the molding operation is complete, the center segment 30 connects the heel and the toe in a unitary club head structure. Upon removal of the club head from the molding die, any minor flashing or gate marks on the center segment 30 of the golf club head 20 may be removed. In addition, the strike face 29 of the golf club head 20 may be milled to achieve a more pleasing aesthetic appearance. The resulting golf club head 20 has a high density heel 24, a lower density center segment 30 and a high density toe 25.

In a preferred embodiment, compression molding is used to simultaneously form the center segment 30 of the club head 20, 40 or 50 from a thermoset polymer and to connect the heel 24 and the toe 25 to the center segment 30 in a unitary club head structure. In this embodiment, the process begins by impregnating continuous reinforcing fibers with an uncured thermoset resin system and arranging the fibers into sheet form. A preform is prepared by die cutting the impregnated sheet and building up a laminated form with the approximate shape of the finished part, i.e., the center segment 30 of the golf club head 20, 40 or 50. The preform is then vacuum consolidated to impart handling strength.

A heel 24 and toe 25 are then placed in a compression molding die on opposite sides of a die chamber as shown in Figure 8. The preform is placed in the die chamber between the heel 24 and toe 25 sections. The compression molding die lid is closed and the entire mold is placed in a platen press. Heated platens apply uniform compressive load to the compression molding die thereby consolidating the preform. The compression molding die is held at an elevated temperature in order to allow the resin to flow. The resin fills the die chamber and wets the bonding surfaces of the heel 24 and toe 25. The combination of pressure and temperature serves to cure the thermoset resin, which forms a structural adhesive bond with the metallic surfaces of the heel 24 and toe 25. After the compression molding cycle is complete, the molding die is removed from the platen press, opened, and a unitary golf club head is removed in a semi-finished state. Any amounts of resin overflow (flash) on the heel 24 and toe 25 sections of the golf club head may be easily removed while the resin is still warm and pliable. Final finishing, including grinding, buffing, blasting, etc. may be performed after molding, though the process is capable of producing a net, finished part with proper tooling, tool surface finishes, and process parameters.

The thermoset resin used in the preferred version of the method of the invention can be the preferred epoxide, a polyimide resin (which possesses superior thermal properties) or more inexpensive polyester systems. A variety of epoxy systems are available with different cure times and temperatures, flow characteristics, and modifiers to provide varying toughness, resilience, chemical resistance, and mechanical strength.

The impregnated reinforcing fibers may be oriented in any fashion, such as randomly, in a single direction, or multiple orientations (i.e., 0, 45, and 90 degrees). Matte, randomly oriented discontinuous fibers may also be used, or woven fibers may also be used to give, for example, improved tear strength properties. Several fiber materials may be used to develop specific properties. In the preferred configuration, graphite fibers are used as the primary structural reinforcement. Graphite is preferred over glass or aramid fiber in this application, due to its relatively high modulus of elasticity and superior sound dampening characteristics. Graphite also offers beneficial electrical properties. Specifically, graphite fibers are electrically conductive, and when molded in the center segment, randomly contact the metal interface surfaces of the heel 24 and toe 25 of the golf club head. As a result, the graphite fibers provide very low resistance electrical continuity between the metallic heel 24 and toe 25 sections. This proves advantageous if any electrochemical coating, finishing, or cleaning processes are employed later in the manufacturing process since only a single electrical contact point needs to be established (typically at the hosel).

The preforms may also be formed and pre-consolidated around a metal mandrel or part pattern. In another variation, the preform may be wound around a mandrel by a computer numerically controlled filament winder which either wets the fiber with resin as it dispenses it for winding, or winds a fibrous preform which later has resin transferred to it under pressure to accomplish impregnation. Preconsolidation of the preform may be accomplished by the preferred vacuum method, or by mechanical means in a simplified compression mold.

The impregnated fibers which create the exterior surface and strike face of the golf club head may be of several forms. Different fiber reinforcements and/or orientations may be used to achieve different mechanical and optical properties at the strike face. Similarly, the resin used in the impregnated overlays may be varied in order to achieve different mechanical and optical properties at the strike face of the golf club head. Chemical modifiers may also be added to adjust the toughness, abrasion resistance, sound dampening, or color of the resin. In one embodiment, glass fiber is used in a colored epoxy resin matrix to achieve a rigid, wear resistant surface, with a pleasing aesthetic appearance.

The method of the present invention wherein the center section 30 is formed in a mold between the heel 24 and toe 25 may be modified in order to improve the performance characteristics of the resulting golf club head. For instance, process variances that increase the metal/non-metal bond area and provide mechanical support to the joints between the center segment 30 and the toe 25 and between the center segment 30 and the heel 24 are available.

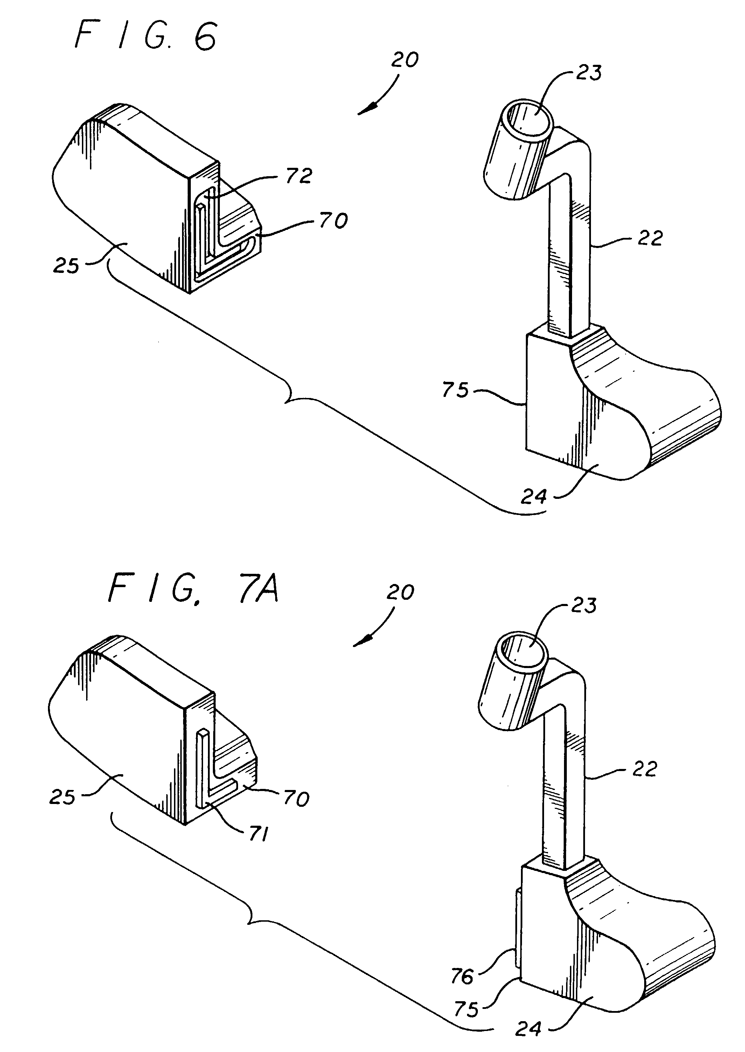

In a first process variant that increases the metal/non-metal bond area, the toe and the heel 24 are formed so that a projection is developed on the inner surface 70 of the toe and the inner surface 75 of the heel 24 that are bonded to the polymeric material in the center segment of the club head. One version of these projections is shown in Figure 7A. In Figure 7A, it can be seen that an L-shaped projection 71 is formed on the inner surface 70 of toe 25 and an L-shaped projection 76 is formed on the inner surface 75 of heel 24.

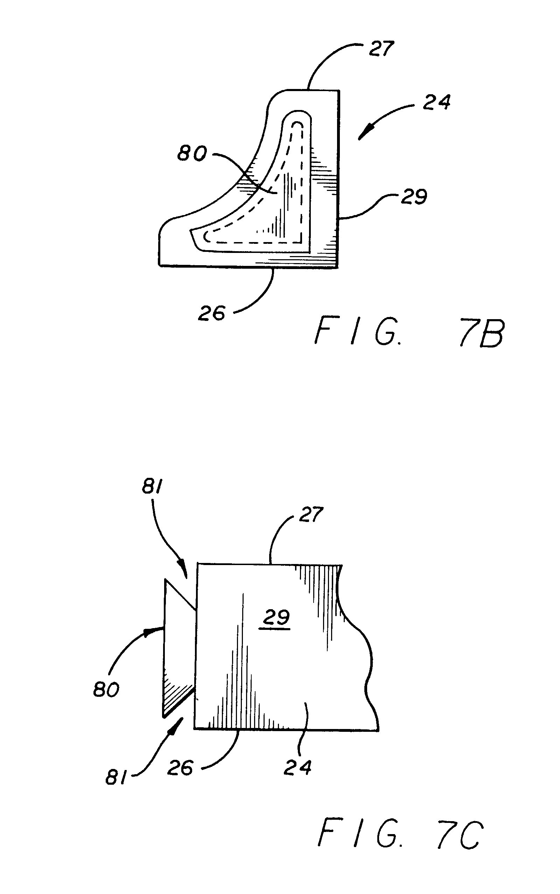

Another version of the projections is shown in FIGS. 7B and 7C. In this embodiment, a "dovetail-type" configuration, as indicated by reference numeral 80, forms a channel 81 into which polymer can flow during the molding cycle to create a mechanical fastening mechanism for the assembly. In the embodiment of the invention that uses a fiber reinforced composite to form the center segment 30, it may be desirable to place individual, non-pre-compacted impregnated sheets in the die cavity to ensure flow into the dovetail channel and to secure the preform.

Projections in the heel 24 and toe 25 may also be formed using other methods. For instance, in a method employing powdered metallurgy processes, as described earlier, at least one metallic member, such as a stainless steel pin or dowel, can be inserted into a surface of each of the green compacts before the green compacts are heated at an elevated temperature. At least a portion of the metallic member is left protruding from the surface of the green compacts. When the green compacts are heated at an elevated temperature, the metallic member is diffusion bonded to the metallic material in the green compact. In this process variant, a projection, consisting of the portion of the metallic member protruding from the surface of the green compact, is developed in a surface of the toe 25 and in a surface of the heel 24.

When the toe and heel are placed in the molding die as shown in Figure 8, the projections are arranged so as to contact the polymeric material when the polymeric material is introduced into the die chamber of the molding die. In this manner, the solidified polymeric material which comprises the center segment of the club head surrounds the projections in the toe and heel, providing increased metal/polymeric material bond area. The arrangement of the projections of the toe and heel in the polymeric material provides the club head with increased resistance to shear stresses at both the first border between the center segment and the toe and the second border between the center segment and the heel of the club head. However, even if projections are formed on the inner surfaces of the heel and toe portions, the non-metallic material of the center segment will, along at least one plane perpendicular to the strike face of the club head, extend depthwise from the strike face of the club head to the back surface of the club head.

In a second process variant that increases the metal/non-metal bond area, the toe and heel are formed so that a recessed area or undercut is developed in the inner surface of the toe and the inner surface of the heel. One version of these recessed areas is shown in Figure 6, where it can be seen that a recessed area or undercut 72 is formed in the inner surface 70 of the toe 25. A similar recessed area or undercut 77 is formed in the inner surface 75 of heel 24. When the toe and heel are placed in the molding die as shown in Figure 8, the undercuts 72, 77 are arranged facing the die chamber so that the polymeric material may flow into the undercuts 72, 77 in the toe and heel when the polymeric material is introduced into the die chamber. In the embodiment of the invention using fiber reinforced epoxy to form the center segment, it may also be desirable to place individual, non-pre-compacted impregnated sheets in the die cavity to ensure flow into the undercuts and to secure the preform. This arrangement of the heel, toe and center segment of the club head provides increased metal/polymeric material bond area and increases the resistance of the club head to the shear stresses that may develop at both the first border between the center segment and the toe and the second border between the center segment and the heel of the club head.

In still another process variant of the method of the present invention, the inner surface 70 of the toe and the inner surface 75 of the heel are coated with a bonding agent before being placed in the molding die. The toe and the heel are then arranged in the molding die with the coated surfaces in facing relationship on opposed sides of the die chamber so that the coated surfaces contact the polymeric material when the polymeric material is introduced into the die chamber. The resulting bond between the polymeric material and the metallic materials is of enhanced strength. This enhanced bond resists the effects of shear stresses at both the first border between the center segment and the toe and the second border between the center segment and heel of the club head when the club head is contacted by an object.

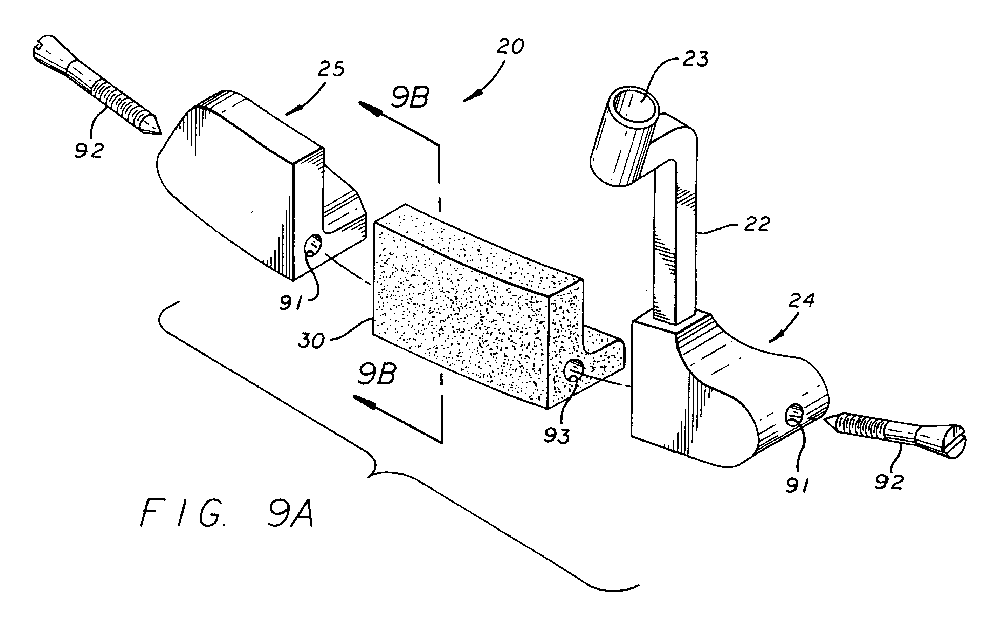

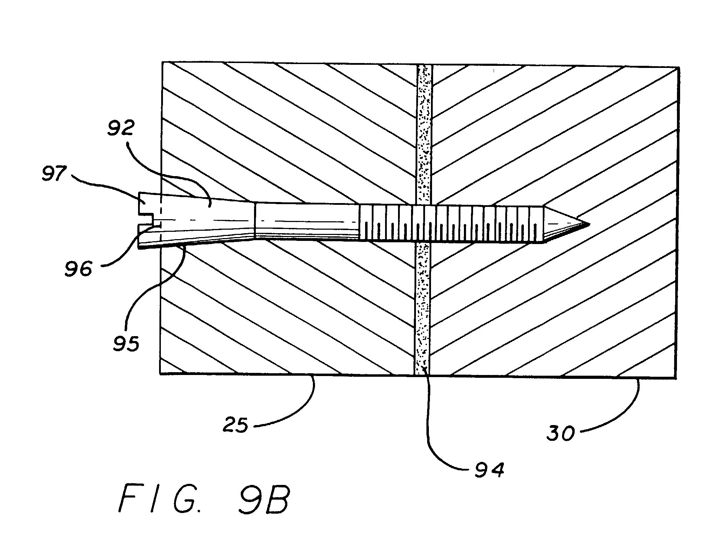

The heel 24, toe 25 and center segment 30 of the golf club head 20, 40 or 50 may be assembled to form a golf club head using any other methods that result in sufficient structural integrity. In another embodiment, the heel 24, toe 25 and center segment 30 are bonded chemically and secured with mechanical fasteners. Referring now to Figures 9A and 9B, the heel 24, toe 25 and center segment 30 are prepared using any suitable method, such as those described above. Holes 91, preferably tapered, are then drilled in the heel 24 and toe 25 to accept a fastener 92, such as a threaded screw, bolt or any suitable fastener. Matching pilot holes 93 are also formed in the center segment 30, whether by drilling, formation when the center segment is formed (such as in the molding process), or any other method. Prior to assembly, an appropriate adhesive 94 is applied to the bonding interface and the heel 24, toe 25 and center segment 30 are fixed in place with the fasteners 92. In the preferred embodiment, the taper 95 permits the screw shanks to interfere with the holes 91 and develop a load enhance the bond and to seal the holes 91. The adhesive 94 is cured with time and temperature and the screw heads 97 are then ground flush with the heel and toe surfaces 96. It can be appreciated that the taper section 95 allow the screws to develop the necessary hole interference and preload, and still allow the screw heads 97 to be removed without compromising the preload, or structural integrity of the fastener.

It also may be desirable to add an effective amount of a colorant to the material used to form the center segment 30 so that it has a different color than the heel 24 and the toe 25. The toe 24 and heel 25 (or their respective surfaces) also may be treated so that they have a different appearance from that of the center segment 30. It is believed that contrasting colors in the heel, toe, and center segment of the club head provide for a pleasing aesthetic appearance.

Various surface treatments may also be used to color the toe and heel portion. Suitable surface treatments may include: organic coatings, such as paint or preferably an enamel or acrylic electrocoating; conversion coatings such as zinc phosphate, manganese phosphate or black oxide; or electroplating such as a zinc, nickel or chromium plating with a dark color dichromate finish, e.g., zinc plating with a black dichromate.

In addition, the appearance of the ball striking surface of the club head is enhanced by milling the ball striking surface. In the process variant wherein a surface treatment step is included in the method of the invention, the milling step would generally have to be performed before any surface treatment as milling the ball striking surface may remove the coating on the heel or toe.

Suitable materials to be used in the methods of the present invention have been referenced above in the description of the club head of the present invention. Namely, the center segment may be formed from an elastomer such as a thermoplastic elastomer selected from the group consisting of styrene co-polymers, co-polyesters, polyurethanes, polyamides, olefins and vulcanates. Inorganic fillers may also be added to the elastomer to enable one to achieve any combination of properties desired in the center segment. For example, the fillers may reinforce the elastomer. Suitable inorganic fillers include: glass, graphite or aramid fibers; silicates; calcium carbonate; silica; metal oxides such as aluminum oxide, titanium dioxide, and zinc oxide; carbon black; and metal powders. A most preferred elastomer is a fiber reinforced thermoplastic polyamide.

Most preferably, the center segment is formed from a reinforced thermoset polymer using the preferred version of the method of the invention. Thermosetting resins suitable for forming the center segment include epoxides, polyimides and polyester resins. The preferred thermoset is an epoxy resin. The thermoset is preferably reinforced with fiber. Suitable fibers include glass, graphite and aramid fibers. The most preferred material for forming the center segment is a continuous fiber reinforced polyimide epoxy.

The powdered metallic material used in the molding, compaction and sintering processes may preferably comprise a metallic material including at least two metals. Upon completion of the sintering step of the method, it is preferred that the metallic materials in the sintered heel and sintered toe each have a final alloy density of at least 7 grams per cubic centimeter. In a more preferred version of the invention, the metallic materials in the sintered heel and sintered toe have a final alloy density of 7 to 13 grams per cubic centimeter. In a still more preferred version of the invention, the metallic materials in the sintered heel and sintered toe have a final alloy density of 9 to 11 grams per cubic centimeter. In a most preferred version of the invention, the metallic materials in the sintered heel and sintered toe have a final alloy density of approximately 10 grams per cubic centimeter. In addition, it is preferred that the density of the sintered heel and the density of the sintered toe be at least 8 times greater than the density of the center segment.

The powdered metallic materials may also include a first powdered metal dispersed in a second powdered metal wherein the first metal has a higher density than the second metal. Preferably, the first powdered metal has a density of at least 10 grams per cubic centimeter, and the second powdered metal is selected from the group consisting of iron based alloys, nickel based alloys, and copper based alloys. Specific examples of a suitable first metal include tungsten, tantalum, niobium and molybdenum.

Ferrous alloys are the preferred metal used in the investment casting process that forms the heel and toe of the golf club of the present invention. It has been discovered that a ferrous alloy having a density of about 7 to about 8 g/cm³ is advantageous when used in the investment casting process.

Thus, it is seen that an improved golf club head and method of manufacture thereof is provided. It can be seen that the golf club heads of the present invention have desirable heel-toe weighting characteristics. Specifically, a high inertia design is achieved by placing high-density metals in the toe and heel as far from the center segment of the golf club as is possible. The center segment of the club is made with lower density materials. A high inertia design is desired to prevent the golf club from twisting when striking a golf ball on other than the "sweet spot" or center of gravity of the club.

In addition, the method of the present invention provides significant cost savings over other processes used to produce high performance golf clubs. The use of advanced powder metallurgy or investment casting techniques allows for the production of near net shape heel and toe sections of the club head. This results in the elimination of hand finishing processes. The powder metallurgy and investment casting techniques also allow the density of the heel and toe to be precisely controlled and altered by changing the ratio of heavy and light metals in the powder metal blend. The use of plastic molding techniques to produce the center segment of the club head also reduces manufacturing costs. Furthermore, the elimination of many of the manufacturing steps also decreases the lead time for production of the golf club head of the present invention.

Although the present invention has been described in considerable detail with reference to certain preferred embodiments, one skilled in the art will appreciate that the present invention can be practiced by other than the preferred embodiments, which have been presented for purposes of illustration and not of limitation. Therefore, the spirit and scope of the appended claims should not be limited to the description of the preferred embodiments contained herein.

## Claims

1. A golf club head comprising three discrete segments including:
a heel being formed of a first material having a first density;
a toe being formed of a second material having a second density; and
a center segment being formed of a third material having a density less than the first density and the second density, said heel, toe and center segment being joined together.

2. The golf club head of claim 1 further comprising a strike face extending across one side of said heel, toe, and center segment, said third material of said center segment being homogenous substantially entirely along at least one plane perpendicular to said strike face.

3. The golf club head of claim 1 wherein third material of said center segment is a non-metallic material.

4. The golf club head of claim 1 wherein said third material of said center segment is a fiber reinforced composite material.

5. The golf club head of claim 1 wherein the third material comprises an elastomer including an inorganic filler.

6. The golf club head of claim 5 wherein the inorganic filler is selected from the group consisting of glass, graphite, aramid fibers, silicates, calcium carbonate, silica, metal oxides, carbon black and metal powders.

7. The golf club head of claim 1 wherein the third material comprises a thermosetting polymer.

8. The golf club head of claim 7 wherein the third material includes said thermosetting polymer, reinforced with a fiber.

9. The golf club head of claim 8 wherein said fiber is selected from the group consisting of glass, graphite, aramid fibers, and boron.

10. The golf club head of claim 1 wherein said first material and said second material are the same material.

11. The golf club head of claim 1 wherein said first material and said second material are metallic materials.

12. The golf club head of claim 1 wherein:
said first material and said second material are the same material and are both metallic materials; and
said third material of said center segment is a fiber reinforced composite material.

13. The golf club head of claim 1 wherein both of said heel and said toe define a tapered aperture for receiving a fastener and said center section defines plural pilot apertures, each pilot aperture matching a corresponding one of said apertures defined in each of said heel and said toe.

14. The golf club head of claim 14 further comprising:
a fastener received in said tapered aperture in said heel and said matching pilot aperture in said center section, fastening said heel to said center section; and
a fastener received in said tapered aperture in said toe and said matching pilot aperture in said center section, fastening said toe to said center section.

15. The golf club head of claim 14 further comprising a chemical bonding agent bonding said heel to said center section and a chemical bonding agent bonding said toe to said center section.

16. A golf club head comprising:
three discrete segments including a heel being formed of a first dense metallic material, a toe being formed of a second dense metallic material, and a center segment being formed of a non-metallic material having a density substantially less than the metallic materials comprising said heel or said toe, said heel, toe and center segment being joined together; and
a strike face extending across one side of said heel, toe, and center segment, said non-metallic material comprising said center segment being homogenous substantially entirely along at least one plane perpendicular to said strike face.

17. A golf club head comprising:
three discrete segments including a heel being formed of a first dense metallic material, a toe being formed of a second dense metallic material, and a center segment being formed of a non-metallic material having a density substantially less than the metallic materials comprising said heel or said toe, said heel, toe and center segment being joined together; and
a strike face extending across one side of said heel, toe, and center segment;
said non-metallic material comprising said center segment being homogenous substantially entirely along at least one plane perpendicular to said strike face,
wherein the first and second metallic materials each comprise at least two metals, and the first and second metallic materials each have a final alloy density of at least 7 grams per cubic centimeter.

18. The golf club head of claim 16 wherein the non-metallic material has a homogeneous composition.

19. The golf club head of claim 18 wherein the first and second metallic materials each comprise at least two metals, and the first and second metallic materials each have a final alloy density of at least 7 grams per cubic centimeter.

20. The golf club head of claims 17 or 19 wherein the first and second metallic materials each have a final alloy density of 7 to 13 grams per cubic centimeter.

21. The golf club head of claim 20 wherein the first and second metallic materials each have a final alloy density of 9 to 11 grams per cubic centimeter.

22. The golf club head of claim 21 wherein the first and second metallic materials each have a final alloy density of approximately 10 grams per cubic centimeter.

23. The golf club head of claims 17 or 19 wherein the first and second metallic materials each comprise a first metal dispersed in a matrix of a second metal, the first metal having a higher density than the second metal.

24. The golf club head of claim 23 wherein the first metal has a density of at least 10 grams per cubic centimeter, and the second metal is selected from the group consisting of iron based alloys, nickel based alloys, and copper based alloys.

25. The golf club head of claims 16 or 17 wherein the non-metallic material is an elastomer.

26. The golf club head of claim 25 wherein the elastomer is a thermoplastic elastomer selected from the group consisting of styrene co-polymers, co-polyesters, polyurethanes, polyamides, olefins and vulcanates.

27. The golf club head of claim 26 wherein the elastomer is a polyurethane.

28. The golf club head of claims 1, 16 or 17 wherein the club head is selected from the group consisting of iron-type club heads, wood-type club heads and putter-type club heads.

29. The golf club head of claims 1, 16 or 17 wherein said center section material includes a coloring agent rendering it a different color from that of either the heel or the toe.

30. A method of making a golf club head having a heel, a toe, and a center segment between the heel and the toe, the method comprising the steps of:
forming the toe of the golf club head from a first material in a first forming operation;
forming the heel of the golf club head from a second material in a second forming operation; and
forming the center segment of the club head by a plastic molding operation which introduces a club head material into a chamber between the toe and heel whereby the center segment connects the heel and the toe in a unitary club head structure.

31. A method of making a golf club head having a heel, a toe, and a center segment connecting the heel and the toe, the method comprising the steps of:
forming the toe of the golf club head from metallic material in a first forming operation;
forming the heel of the golf club head from metallic material in a second forming operation;
placing the heel and the toe in a molding die on opposite sides of a die chamber, the die chamber being shaped to form the center segment of the club head; and
forming the center segment of the club head by a plastic molding operation which introduces polymeric material into the die chamber whereby the center segment connects the heel and the toe in a unitary club head structure.

32. The method of claims 30 or 31 wherein said chamber is in a compression molding die, the method further comprising:
placing the heel and the toe in said molding die on opposite sides of said chamber, the chamber being shaped to form the center segment of the club head, before said step of forming the center segment.

33. The method of claims 30 or 31 further comprising the steps of:
forming a preform for said center section; and
placing said preform in said chamber before said step of forming said center section.

34. The method of claims 30 or 31 wherein said step of forming the center segment includes molding said center section using a fiber reinforced composite material.

35. The method of claims 30 or 31 wherein each of the steps of forming the toe and forming the heel include forming operations selected from the group consisting of cold isostatic pressing and pressureless sintering, room temperature die compaction and pressureless sintering, hot die compaction, injection molding, investment casting, and machining.

36. The method of claims 30 or 31 wherein:
the toe is formed so that a recessed area is developed in a surface of the toe,
the heel is formed so that a recessed area is developed in a surface of the heel, and
the toe and the heel are placed in the molding die so that both of the recessed areas contact the polymeric material when the polymeric material is introduced into the die chamber.

37. The method of claims 30 or 31 wherein:
the toe is formed so that a dovetail-type projection is developed in a surface of the toe;
the heel is formed so that a projection is developed in a surface of the heel; and
the toe and the heel are placed in the molding die so that both of the projections contact the club head material when the club head material is introduced into the die chamber.

38. The method of claims 30 or 31 wherein said step of forming the center segment includes a step of adding a colorant to said center section, making the center section a different color from that of either the toe or the heel.

39. The method of claims 30 or 31 wherein:
at least one connecting surface formation is formed on a surface of the heel or toe in the first and second forming operations, and
the toe and the heel are placed in the molding die so that at least one connecting surface formation contacts the polymeric material when the polymeric material is introduced into the die chamber.

40. The method of claims 30 or 31 further comprising the step of:
coating at least one surface of the toe or heel with a bonding agent,
wherein the toe and the heel are placed in the molding die so that at least one surface coated with the bonding agent contacts the polymeric material when the polymeric material is introduced into the die chamber.

41. The method of claims 30 or 31 wherein the step of forming the center segment includes introducing an elastomer into the chamber.

42. The method of claim 41 wherein the elastomer is a thermoplastic elastomer selected from the group consisting of styrene co-polymers, co-polyesters, polyurethanes, polyamides, olefins and vulcanates.

43. The method of claim 41 wherein the elastomer is a polyurethane.

44. The method of claims 30 or 31 wherein the plastic molding operation is selected from the group consisting of resin transfer molding, injection molding, reaction injection molding, and compression molding.

45. The method of claims 30 or 31 wherein:
the step of forming the toe of the golf club head comprises filling a first mold having the shape of the toe of the golf club head with a first powdered metallic material, compressing the first powdered metallic material in the first mold at a pressure sufficient to form a green compact of the first powdered metallic material, removing the green compact from the first mold, and heating the green compact to an elevated temperature sufficient to form a sintered toe; and
the step of forming the heel of the golf club head comprises filling a second mold having the shape of the heel of the golf club head with a second powdered metallic material, compressing the second powdered metallic material in the second mold at a pressure sufficient to form a green compact of the second powdered metallic material, removing the green compact from the second mold, and heating the green compact to an elevated temperature to form a sintered heel.

46. The method of claim 45 further comprising the steps of:
inserting at least one metallic member into each of the green compacts before the green compacts are heated at an elevated temperature so that a projection is developed in a surface of the sintered toe and a projection is developed in a surface of the sintered heel,
wherein the sintered toe and the sintered heel are placed in the molding die so that both of the projections contact the polymeric material when the polymeric material is introduced into the die chamber.

47. The method of claims 30 or 31 wherein:
the step of forming the toe of the golf club head comprises filling a first mold having the shape of the toe of the golf club head with a first powdered metallic material and applying pressure and heat simultaneously to the first powdered metallic material to form a sintered toe; and
the step of forming the heel of the golf club head comprises filling a second mold having the shape of the heel of the golf club head with a second powdered metallic material and applying pressure and heat simultaneously to the second powdered metallic material to form a sintered heel.

48. The method of claims 45 or 47 wherein the sintered heel and the sintered toe formed from the step of heating the green compacts to an elevated temperature are near net shape.

49. The method of claims 45 or 47 wherein the powdered metallic materials each comprise at least two metals, and the sintered toe and sintered heel each have a density of at least 7 grams per cubic centimeter.

50. The method of claim 49 wherein the sintered toe and sintered heel each have a density of 7 to 13 grams per cubic centimeter.

51. The method of claims 45 or 47 wherein the first and the second powdered metallic materials each comprise a first metal dispersed in a second metal, the first metal having a higher density than the second metal.

52. The method of claim 51 wherein the first metal has a density of at least 10 grams per cubic centimeter, and the second metal is selected from the group consisting of iron based alloys, nickel based alloys, and copper based alloys.

53. The method of claim 45 or 47 further comprising the steps of:
forming the second mold so that a bore is developed in the green compact after compressing;
filling a third mold having the shape of a hosel of the golf club head with a third powdered metallic material;
compressing the powdered metallic material in the third mold at a pressure sufficient to form a green compact of the powdered metallic material;
removing the green compact from the third mold; and
inserting an end of the green compact formed in the third mold into the bore of the green compact formed in the second mold whereby the sintered heel formed when the green compacts are heated at an elevated temperature includes an integral hosel.

54. The method of claims 30 or 31 wherein:
the step of forming the toe of the golf club head comprises filling a first mold having the shape of the toe of the golf club head with a first liquid metallic material and allowing the first liquid metallic material to cool to form the toe; and
the step of forming the heel of the golf club head comprises filling a second mold having the shape of the heel of the golf club head with a second liquid metallic material and allowing the second liquid metallic material to cool to form a heel.

55. The method of claims 30 or 31 wherein:
the step of forming the toe of the golf club head comprises machining a solid piece of a metallic material to form the toe; and
the step of forming the heel of the golf club head comprises machining a solid piece of a metallic material to form a heel.

56. The method of claims 30 or 31 wherein:
the step of forming the toe of the golf club head comprises injecting a fluid mixture including a polymeric material and a metallic material into a first die chamber shaped to form the toe; and
the step of forming the heel of the golf club head comprises injecting a fluid mixture including a polymeric material and a metallic material into a second die chamber shaped to form the heel; and
the first and second die chambers are cooled to thereby form the heel and toe.
